# EUROPEAN PATENT APPLICATION

(11) **EP 2 902 246 A2**
(43) Date of publication of application: **05.08.2015**
(21) Application number: 14169102.2
(22) Date of filing: 20.05.2014
(51) Int. Cl.: B60L 3/00, B60L 11/18

(54) **Rectifying module of a vehicular power generating system**

(30) Priority: 30.12.2013 TW 102224812
(71) Applicant: Reduce Carbon Energy Develop Co., Ltd., New Taipei City 23741 (TW); Chen, Fu-Chieh, New Taipei City 23741 (TW)
(72) Inventor: CHEN, FU-CHIEH, 23741 NEW TAIPEI CITY (TW)
(74) Representative: Brown, Michael Stanley

(57) **Abstract**

A rectifying module of a vehicular power generating system is disclosed. The power generating system includes a power generating module, a rectifying module and a secondary battery. The rectifying module includes a three-phase rectifier, a sensor coupled with the three-phase rectifier to sense the temperature or AC voltage thereof, a fault detector coupled with the three-phase rectifier to detect whether the three-phase rectifier is malfunctioning, a controller coupled with the sensor and the fault detector, and a switch disposed in a charging circuit of the secondary battery and coupled with the controller. The controller receives a signal of temperature or AC voltage of the sensor and converts the signal into a signal value which is compared with a default value built into the controller. When the signal value is larger than the default value, the controller commands the switch of the charging circuit to off, which aborts charging the secondary battery. The controller also commands a warning device to issue a warning signal. When the signal value is smaller than or equal to the default value, the controller commands the switch to on, which resumes charging the secondary battery.

## Description

### BACKGROUND OF THE INVENTION

### a) Field of the Invention

The present invention relates to a rectifying module of a vehicular power generating system, and more particularly to a rectifying module which is able to sense a signal sent from a three-phase rectifier and to control on and off of charging a secondary battery based upon that signal.

### b) Description of the Prior Art

Vehicular electrical devices are generally separated into a startup device, an ignition device, a lighting device, meters, an air conditioner and an audio device. Electricity of all these devices is provided by a power generating module and a secondary battery; for example, the starting power of the startup device is provided by the secondary battery, whereas the electricity of the lighting device, audio device, meters and air conditioner is provided by the power generating module when the engine is on, and is provided by the secondary battery when the engine is off.

The power generating module is driven by the engine through a belt and is responsible for converting mechanical energy of the engine into electric energy. The starting voltage of the power generating module is the three-phase AC (Alternating Current) voltage which should be rectified to the DC (Direct Current) voltage through a diode in order to provide to the abovementioned devices for use and to charge the secondary battery. The generating voltage of the power generating module is directly proportional to the rotational speed of the engine; when the rotational speed of the engine increases, the generating voltage will increase too. To prevent the electrical devices or the secondary battery from being burnt down by a high voltage when the engine rotates in a high speed, a voltage limiter is merged into the three-phase rectifier to regulate the voltage. As the three-phase rectifier is combined with the functions of rectifying (AC to DC) and voltage regulation, the rectifier can be damaged in two conditions. The first one is the loss of capability for regulating the voltage, which allows the recharge voltage to continue to rise up as the rotational speed of the engine increases, thereby damaging the electrical devices or the secondary battery. The other one is the loss of capability for rectifying, which prevents the electricity of the power coil from being able to rectify and the secondary battery from being charged, thereby running down the secondary battery or damaging the secondary battery by over-discharge.

When the three-phase rectifier is carrying out a voltage limiting operation, the temperature of the rectifier body will increase and the high temperature is detrimental to electronic components, as the rectifier can be easily damaged by the high temperature, which will finally result in the breakdown of the vehicular electrical devices or secondary battery. Accordingly, monitoring the rectifier should be one of the important issues in protecting the vehicular power generating module.

Moreover, the use of electricity for some special vehicles (such as racing cars) is not the same as that for the ordinary vehicles. When this kind of vehicle is running, the engine will often keep rotating at a high or ultrahigh speed, and the electricity of the power generating module will be expected to give back to the engine as much as possible, in order to improve the performance of the instantaneous speed of the vehicle. Therefore, monitoring the rectifier should be a feasible solution to achieve this requirement.

### SUMMARY OF THE INVENTION

The primary object of the present invention is to provide a rectifying module of a vehicular power generating system for solving the issues of how to monitor the three-phase rectifier of the vehicular rectifying module for the protection of the three-phase rectifier, the electrical devices and the secondary battery, as well as of how to control the return of the electricity of the power generating module to the engine for the improvement of the speed performance of the vehicle.

To achieve the abovementioned object, the present invention discloses a rectifying module of a vehicular power generating system, wherein the power generating system includes a power generating module, a rectifying module and a secondary battery. The rectifying module includes a three-phase rectifier, a sensor which is coupled with the three-phase rectifier to sense the three-phase rectifier and output a signal of the three-phase rectifier, a controller which is coupled with the sensor and receives the signal, and a switch which is disposed in a charging circuit of the secondary battery and is coupled with the controller. The controller receives the signal from the sensor and converts the signal into a signal value. The signal value is then compared with a default value which is built into the controller; when the signal value is larger than the default value, the controller will command the switch of the charging circuit to off, which aborts charging the secondary battery; on the other hand, when the signal value is smaller than or equal to the default value, the controller will command the switch to on, which resumes charging the secondary battery. In addition, the abovementioned sensor signal includes temperature or AC voltage.

The rectifying module further includes a warning device. When the charging switch is off, the warning device will send out a warning signal; whereas, when the switch is on, the warning device will send out a prompting signal.

The rectifying module further includes a fault detector to detect whether the three-phase rectifier is malfunctioning. The fault detector is coupled with the three-phase rectifier and the controller. When detecting that the three-phase rectifier is malfunctioning, the fault detector will send out a fault signal to the controller which receives that fault signal and commands the warning device to send out a fault reminding signal.

The present invention is provided with following functions.

A complete rectifying module is formed by combining the sensor, the controller, the switch, the fault detector and the three-phase rectifier, thereby simplifying the vehicular electronic system.

The temperature of the three-phase rectifier is sensed by the sensor. When the sensed temperature is larger than a default value, the controller will command the switch to off, which aborts charging the secondary battery. On the contrary, if the sensed temperature is smaller than or equal to the default value, then the controller will command the switch to off, which resumes charging the secondary battery. Therefore, the three-phase rectifier, the secondary battery and the vehicular electrical devices can be protected.

The AC voltage of the three-phase rectifier is sensed by the sensor. When the sensed AC voltage is larger than a default value, the controller will command the switch to off, which aborts charging the secondary battery to prevent the secondary battery from being damaged by overcharge, and gives back the electricity of the power generating module to the engine as much as possible to improve the speed performance of the vehicle.

When charging the secondary battery is aborted, the warning device will send out a warning signal of aborting charging. On the other hand, when charging the secondary battery by the power generating module is resumed, the warning device will send out a prompting signal of resuming charging. Drivers are reminded of by the warning or prompting signal.

When detecting that the three-phase rectifier is malfunctioning, the fault detector will send out a fault signal to the controller which receives that fault signal and commands the controller to send out a fault reminding signal, reminding the driver that he or she cannot use the vehicle anymore and should send the vehicle for repairing as soon as possible.

To enable a further understanding of the said objectives and the technological methods of the invention herein, the brief description of the drawings below is followed by the detailed description of the preferred embodiments.

### BRIEF DESCRIPTION OF THE DRAWINGS

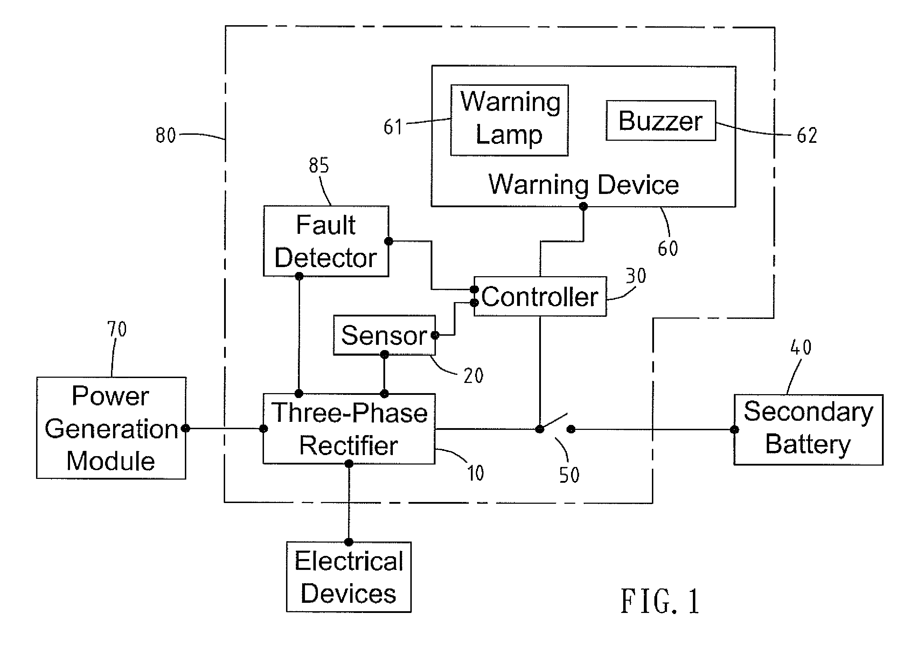

FIG. 1 shows a structural block diagram of a power generating module, a rectifying module and a secondary battery of the present invention.

### DETAILED DESCRIPTION OF THE PREFERRED EMBODIMENTS

Referring to FIG. 1, it shows a rectifying module of a vehicular power generating system, according to the present invention. The power generating system comprises a power generating module 70, a rectifying module 80 and a secondary battery 40, wherein the rectifying module 80 includes:
a three-phase rectifier 10;
a sensor 20, the sensor 20 is coupled with the three-phase rectifier 10 to sense the three-phase rectifier 10 and output a signal of the three-phase rectifier 10, with that in the present embodiment, the sensor 20 senses the temperature of the three-phase rectifier 10 or the AC voltage which passes through the three-phase rectifier 10;
a controller 30, the controller 30 is coupled with the sensor 20 and receives the signal of the sensor 20;
a switch 50, the switch 50 is disposed in a charging circuit of the secondary battery 40 and is coupled with the controller 30; and
a warning device 60, the warning device 60 is coupled with the controller 30 and includes a warning lamp 61 or buzzer 62.

The controller 30 receives the signal of the sensor 20 and converts the signal to a signal value which is then compared with a default value built into the controller 30. When the signal value is larger than the default value, the controller 30 will command the switch 50 of the charging circuit to off, which aborts charging the secondary battery 40 by the power generating module 70. In the meantime, the warning device 60 will send out a warning signal of aborting charging; for example, the warning lamp 61 gives out red light or the buzzer 62 buzzes one long beep. On the other hand, when the signal value is smaller than or equal to the default value, the controller 30 will command the switch 50 to on, which resumes charging the secondary battery 40 by the power generating module 70. In the meantime, the warning device 60 will send out a prompting signal of resuming charging; for example, the warning lamp 61 gives out green light or the buzzer 62 buzzes two short beeps.

The operation and function of the present invention are described using temperature monitoring as an exemplification. The temperature of the three-phase rectifier 10 will rise up when performing the voltage limiting operation and although the three-phase rectifier 10 itself is provided with a heat dissipation structure to aid in dissipating the heat, the effect is limited. High temperature will result in the breakdown of the three-phase rectifier 10, and the breakdown of the three-phase rectifier 10 will eventually cause the damage to the secondary battery 40 or the vehicular electrical devices. Therefore, in the present invention, the sensor 20 is used to sense the temperature of the three-phase rectifier 10, and the controller 30 receives the temperature value of the sensor 20 and compares the temperature value with a default value. When the temperature value is larger than the default value, the controller 30 will command the switch 50 to off, which aborts charging the secondary battery 40. In the meantime, the warning device 60 will send out a warning signal of aborting charging. When the driver is aware of the warning signal of aborting charging, he or she can infer that the three-phase rectifier 10 is overloaded in the voltage limiting operation. At this time, other solutions can be activated altogether. For example, a vehicular headlight can be turned on to dissipate the current of the three-phase rectifier 10 by the operation of the electrical device, such that the voltage limiting operation of the three-phase rectifier 10 can resume to a normal state gradually, and the temperature will drop. On the other hand, when the temperature value is smaller than or equal to the default value, the controller 30 will command the switch 50 to on, which resumes charging the secondary battery 40, and the warning device 60 will send out a prompting signal of resuming charging.

Furthermore, the operation and function of the present invention are described using voltage monitoring as an exemplification. In the present invention, the sensor 20 is used to sense the AC voltage of the three-phase rectifier 10, and the controller 30 receives the voltage value of the sensor 20 and compares the voltage value with a default value. When the voltage value is larger than the default value, the controller 30 will command the switch 50 to off, which aborts charging the secondary battery 40. On the other hand, when the voltage value is smaller than or equal to the default value, the controller 30 will command the switch 50 to on, which resumes charging the secondary battery 40. The voltage monitoring can be applied to a special vehicle (such as racing car), as this kind of vehicle utilizes a small-scaled secondary battery 40 to decrease dissipating power to the engine by the power generating module 70. However, this kind of vehicle often keeps running at a high or ultrahigh speed, and the voltage of the power generating module 70 is often larger than the voltage of the secondary battery 40; therefore, always a part of the engine work will be utilized in charging the secondary battery 40. This not only damages the secondary battery 40 by overcharge, but even affects the speed performance of the vehicle. On the other hand, in the present invention, the AC voltage that passes through the three-phase rectifier 10 is monitored by the sensor 20, and when the voltage value is larger than the default value, the secondary battery 40 will not be charged anymore, and the electricity of the power generating module 70 will be given back to the engine as much as possible, thereby improving the speed performance of the vehicle.

The abovementioned rectifying module 80 further includes a fault detector 85 which is coupled with the three-phase rectifier 10 and the controller 30 to detect whether the three-phase rectifier 10 is malfunctioning. When detecting that the three-phase rectifier 10 is malfunctioning, the fault detector 85 will send out a fault signal to the controller 30, and the controller 30 receives the fault signal and commands the warning device 60 to send out a fault warning signal (for example, the warning lamp 61 flashes continuously or the buzzer 62 buzzes continuously) to remind the driver that he or she cannot use the vehicle anymore and should send the vehicle for repairing as soon as possible.

It is of course to be understood that the embodiments described herein is merely illustrative of the principles of the invention and that a wide variety of modifications thereto may be effected by persons skilled in the art without departing from the spirit and scope of the invention as set forth in the following claims.

## Claims

1. A rectifying module of a vehicular power generating system, in which the power generating system comprises a power generating module, a rectifying module and a secondary battery, wherein the rectifying module includes:
a three-phase rectifier;
a sensor, the sensor is coupled with the three-phase rectifier and
outputs a signal of the three-phase rectifier;
a controller, the controller is coupled with the sensor and receives the signal; and
a switch, the switch is disposed in a charging circuit of the secondary battery and is coupled with the controller;
the controller receiving the signal of the sensor and converting the signal into a signal value, and the signal value being compared with a default value built into the controller; when the signal value is larger than the default value, the controller commanding the switch to off, which aborts charging the secondary battery by the power generating module; whereas, if the signal value is smaller than or equal to the default value, then the controller commanding the switch to on, which resumes charging the secondary battery.

2. The rectifying module of a vehicular power generating system, according to claim 1, wherein the sensor is used to sense the temperature of the three-phase rectifier.

3. The rectifying module of a vehicular power generating system, according to claim 1, further including a warning device, with that when the switch is off, the warning device sends out a warning signal and when the switch is on, the warning device sends out a prompting signal.

4. The rectifying module of a vehicular power generating system, according to claim 3, wherein the warning device includes a warning lamp.

5. The rectifying module of a vehicular power generating system, according to claim 3, wherein the warning device includes a buzzer.

6. The rectifying module of a vehicular power generating system, according to claim 1, wherein the sensor is used to sense the voltage passing through the three-phase rectifier.

7. The rectifying module of a vehicular power generating system, according to claim 1, wherein the rectifying module further includes a fault detector to detect whether the three-phase rectifier is malfunctioning, with that the fault detector is coupled with the three-phase rectifier and the controller; when detecting that the three-phase rectifier is malfunctioning, the fault detector sending out a fault detector to the controller, and the controller receiving the fault detector and commanding the warning device to send out a fault warning signal.
